Europäisches Patentamt

European Patent Office

Office européen des brevets

(11) Veröffentlichungsnummer: **0 301 408**

**A1**

(12) **EUROPÄISCHE PATENTANMELDUNG**

(21) Anmeldenummer: 88111754.3

(22) Anmeldetag: 21.07.88

(51) Int. Cl.4: **C04B 33/13 , C04B 35/00 , B28B 1/24 , B28B 1/26 , B22F 3/22**

(30) Priorität: 29.07.87 DE 3725138

(43) Veröffentlichungstag der Anmeldung:
01.02.89 Patentblatt 89/05

(84) Benannte Vertragsstaaten:
**BE DE FR GB IT NL SE**

(71) Anmelder: **BASF Aktiengesellschaft
Carl-Bosch-Strasse 38
D-6700 Ludwigshafen(DE)**

(72) Erfinder: **Sterzel, Hans-Josef, Dr.
Wasgauring 3
D-6701 Dannstadt-Schauernheim(DE)**
Erfinder: **Mair, Gunther, Dr.
Corneliusstrasse 15
D-6800 Mannheim 25(DE)**

(54) **Verfahren zur Herstellung keramischer Formteile.**

(57) Keramische Formteile, insbesondere solche mit geometrisch komplexen Formen, werden dadurch hergestellt, daß ein keramisches Pulver mit einem Formadditiv gemischt und die Mischung in eine Form eingespritzt wird. Zwecks Verbesserung der mechanischen Eigenschaften der Formteile wird als Formadditiv eine Lösung eines hochmolekularen Polymeren in einem Lösungsmittel verwendet. Die Mischung wird bei einer Temperatur unterhalb der Siedetemperatur des Lösungsmittels und einem Druck zwischen 100 und 1500 bar in eine poröse, gasdurchlässige Form, die eine Temperatur oberhalb der Siedetemperatur des Lösungsmittels aufweist, eingespritzt, wobei der Einspritzdruck solange aufrecht erhalten wird, bis kein Gas mehr aus der Formmasse bzw. der Form entweicht.

EP 0 301 408 A1

## Verfahren zur Herstellung keramischer Formteile

Beschreibung

Die Erfindung bezieht sich auf ein Verfahren zur Herstellung keramischer Formteile, bei dem ein keramisches Pulver mit einem Formadditiv gemischt, die Mischung in eine Form, die die endgültige Gestalt und Abmessung des Formteils festlegt, eingespritzt, das Formadditiv entfernt und die Formmasse gesintert wird.

Zur Darstellung der Erfindungs-Gattung ist im Oberbegriff des Anspruchs 1 von einem bekannten Verfahren im Sinne der EP-A-0 125 912 ausgegangen, nach dem bisher keramische Formkörper durch Spritzgießen hergestellt werden. Dabei wird ein keramisches Pulver mit einem thermoplastischen Kunststoff, Wachs oder einem Schmiermittel, wie Stearinsäure oder Ölsäure, vermischt und die Mischung granuliert. Aus den Granulaten wird mittels einer Spritzgießmaschine ein sogenannter Grünkörper gefertigt. Die zu plastifizierenden Granulate wirken jedoch in der Spritzgießmaschine wie eine Schmiergelpaste und tragen, insbesondere in der Aufschmelzzone, wo das Material noch nicht genügend plastifiziert ist, von den Maschinenteilen Metallspäne ab, die aus dem Grünkörper nicht entfernt werden können. Die Metallpartikel führen zu Inhomogenitäten im gesinterten Formkörper und beeinträchtigen dessen mechansiche Eigenschaften.

Weiterhin führt die große Schergeschwindigkeit in der Einspritzdüse und den Werkzeugkanälen zu hohen Orientierungen der als Fließhilfsmittel benötigten Polymeren, die im Formteil zu mechanischen Spannungen und damit zur Bildung von Mikrorissen führen können. Mikrorisse bleiben beim späteren Ausbrennen der organischen Additive und dem Sintern oft erhalten und setzen ebenfalls die Zuverlässigkeit und Festigkeit der gesinterten Formteile erheblich herab. Nachteilig ist außerdem, daß die zugesetzten organischen Formadditive vor dem eigentlichen Sinterprozess durch Pyrolyse vollständig aus dem Grünkörper zu entfernen sind. Die Pyrolyse, auch Ausbrennung genannt, muß so langsam durchgeführt werden, daß der Druck der entweichenden Gase keine zusätzlichen Riß- und Porenbildungen hervorruft, d.h. die Gase müssen ohne wesentliche Druckentwicklung durch den Grünkörper diffundieren können. Dies bedingt Pyrolysezeiten, die z.B. bei Wanddicken von nur 2-4 mm bereits mehrere Tage betragen und damit die Wirtschaftlichkeit des Verfahrens stark mindern.

Mit der Erfindung soll ein Verfahren zur Herstellung keramischer Formteile geschaffen werden, welches von den geschilderten Mängeln frei ist und insbesondere die Erzeugung geometrisch komplexer Formteile mit hoher Produktivität gewährleistet, d.h. Formadditive sollen besonders rasch aus der Formmasse entfernbar sein.

Diese Aufgabe wird dadurch gelöst, daß als Formadditiv eine Lösung eines hochmolekularen Polymeren in einem Lösungsmittel verwendet wird, wobei etwa 50 - 70 Vol-% des agglomerierten keramischen Pulvers mit etwa 50 - 20 Vol-% der Lösung vermischt werden und die Mischung bei einer Temperatur unterhalb der Siedetemperatur des Lösungsmittels und einem Druck zwischen 100 und 1500 bar in eine poröse, gasdurchlässige Form, die eine Temperatur oberhalb der Siedetemperatur des Lösungsmittels aufweist, eingespritzt wird, und daß der Einspritzdruck solange aufrecht erhalten wird, bis kein Gas mehr aus der Formmasse bzw. der Form entweicht.

Zweckmäßige Weiterbildungen des erfindungsgemäßen Verfahrens sind Gegenstand der Unteransprüche 2 bis 5.

Nach der Erfindung wird Keramikpulver mit in einem Lösungsmittel gelösten Formadditiv, insbesondere einem hochmolekularen Polymeren vermischt. Das Volumenverhältnis zwischen Keramikpulver und der Lösung beträgt etwa 1:1 bis 1:4.

Als Lösungsmittel für die hochmolekularen Polymere kommen Wasser, Alkohole wie Ethanol, n-Propanol oder i-Propanol, sowie unpolare Lösungsmittel, wie aliphatische Kohlenwasserstoffe, in Betracht.

Oxidische Keramikpulver, beispielsweise Magnesiumoxid, Aluminiumoxid, Mullit, Zirkonoxid oder Spinell lassen sich am besten in Wasser desagglomerieren, so daß zu deren Verarbeitung vorteilhaft Wasser als Lösungsmittel eingesetzt wird. Dementsprechend werden wasserlösliche Polymere zum Viskositätsaufbau eingesetzt.

Hochmolekulare wasserlösliche Polymere bilden beim Auflösung in Wasser bereits bei Konzentrationen von 0,05 bis 1 Gew.% hochviskose Lösungen mit Viskositäten von 100 bis 10.000 dPas. Damit weisen diese wäßrigen Lösungen bei Raumtemperatur Viskositäten auf, die denen der üblicherweise als Fließhilfsmittel verwendeten Polymeren im Bereich von 150 bis 300°C entsprechen. Aufgrund der hohen Viskosität wird die Suspension der keramischen Pulver stabilisiert, und selbst unter hohen Schergefällen tritt keine Entmischung ein. Die beim Einspritzen auftretenden hydrostatischen Kräfte werden an die einzelnen Pulverkörner weitergegeben.

Geeignete wasserlösliche Polymere sind beispielsweise Polyvinylpyrrolidon, Polyacrylsäure und deren Salze, Polymethacrylsäure und deren Salze, Polyvinylalkohol, Polyacrylamid sowie Copolymere aus den Monomeren der genannten Polymeren. Weitere Comonomere sind Dimethylaminoethylacrylatmethochlorid oder Diethylaminoethylacrylatsulfat.

Die Gewichtsmittel der Molmassen der wasserlöslichen Polymeren liegen im Bereich von 1 bis 10 Mio g/Mol. Derartige Polymere und Copolymere sind handelsüblich und dienen als Verdickungsmittel, Fließhilfsmittel zur Erniedrigung des Strömungswiderstands sowie als Fällungshilfsmittel.

Bevorzugt eingesetzt werden nichtionische Polyacrylamide, die geringe Mengen Polyacrylsäure enthalten als nichtionische Polymere mit Molmassen von 3 bis 10 Mio g/Mol. Anionische wasserlösliche Polymere sind Copolymere aus Acrylamid mit 20 - 70 Gew.% Ammoniumacrylat und Molmassen von 5 bis 10 Mio g/Mol. Da Alkali-Kationen das Korngrenzenwachstum während des Sinterns der keramischen Pulver ungünstig beeinflussen, werden Ammonium-Ionen als Gegenionen bevorzugt.

Kationische wasserlösliche Polymere sind Polyacrylamide, die 30 bis 80 Gew.% Dimethylaminoethylacrylatmethochlorid oder Diethylaminoethylacrylatsulfat enthalten und Molmassen von 3 bis 5 Mio g/Mol aufweisen.

Auch wasserlösliche hochmolekulare natürliche Polymere und deren Derivate wie Alginate, Methyl/Ethyl- oder Carboxymethylcellulose, Stärke oder Ligninsulfonate sind einsetzbar.

Besonders bevorzugt einsetzbare wasserlösliche Polymere sind solche, die mit 50 bis 1.000 ppm mehrfunktionellen Vernetzern wie Diacryl- oder Dimethylacylverbindungen leicht vernetzt sind. Solche Polymere bestehen hauptsächlich aus Ammoniumacrylat und Acrylamid. Sie werden üblicherweise als Druckfarbenverdickungsmittel für den Textildruck eingesetzt. Gegenüber den völlig unvernetzten wasserlöslichen Polymeren weisen sie den Vorteil auf, daß bei geringen Konzentrationen höhere Viskositäten erzielt werden können, z.B. ca. 10.000 dPas bei Schergefälle 0 und Raumtemperatur als 0,2 %ige wäßrige Lösung. Daneben ist ihre Neigung, die keramischen Pulver auszuflocken extrem gering.

Die anzusetzenden Konzentrationen richten sich nach der angestrebten Viskosität und sind von der Höhe der Molmasse abhängig, sie sollte jedoch 0,2 Gew.%, bezogen auf die keramische Masse nicht überschreiten. Vor dem Ansetzen der Mischung muß die Art der Oberflächenladung der keramischen Pulver ermittelt werden. Es muß vermieden werden, daß die am Polymeren befindlichen Ladungen das entgegengesetzte Vorzeichen der Oberflächenladung des keramischen Pulvers aufweisen. In diesem Fall käme es zur unerwünschten Koagulation des Pulvers. Deshalb wird die Verwendung der schwach vernetzten wasserlöslichen Polymeren mit ihrer geringen Koagulationsneigung besonders bevorzugt.

Es wird so verfahren, daß man möglichst wenig Polymeres einsetzt. Wenn die Polymerkonzentration im geformten Grünling weniger als 0,2 Gew.% beträgt, so verflüchtigt sich die organische Masse während des Aufheizens beim Sintern.

Die Aufbereitung der für das Spritzgießen der keramischen Formteile erforderlichen Masse erfolgt derart, daß man das keramische Pulver durch Mahlen in vollentsalztem Wasser, gegebenenfalls unter Zusatz geringer Mengen eines Tensids, desagglomeriert. Dabei wird von vornherein der endgültige Wasseranteil von 20 bis 50 Vol-% eingesetzt. Sodann wird die Suspension in einen Kneter überführt und das wasserlösliche Polymere zugesetzt. Es wird solange geknetet, bis das Polymere vollständig gelöst und die Viskosität, erkenntlich an der Leistungsaufnahme des Kneters, konstant ist.

Zur Verarbeitung nichtoxidischer Keramikpulver aus Siliziumnitrid, Siliziumcarbid, Sialonen und anderen nichtoxidischen Materialien ist die Dispergierung in Wasser ebenfalls grundsätzlich geeignet. Es hat sich jedoch gezeigt, daß sich nichtoxidische Pulver in nichtwäßrigen Lösungsmitteln besser desagglomerieren lassen. Zudem kann die lange Verweildauer in Wasser bei hydrolysierbaren Materialien wie Siliziumnitrid zur Bildung von unerwünschten Oxidschichten an der Pulveroberfläche führen oder den vorhandenen Sauerstoffgehalt in unkontrollierbarer Weise erhöhen.

Für derartige keramische Pulver bietet sich ein nichtwäßriges Lösungsmittel/Polymersystem an. So sind die bereits aufgeführten wasserlöslichen Polymeren auch in Alkoholen löslich, vorausgesetzt, daß die Polymeren nur bis maximal 5 Mol-% als Salze (Ammoniumpolycarboxylate oder Polyammoniumsalze) vorliegen.

Sollen unpolare organische Lösungsmittel eingesetzt werden, so sind die zu verwendeten hochmolekularen Polymeren in ihrer Löslichkeit daraufhin abzustimmen. In aromatischen Kohlenwasserstoffen wie Toluol oder Xylol ist beispielsweise hochmolekulares Polystyrol löslich.

Besonders bevorzugt sind jedoch die aliphatischen Kohlenwasserstoffe, wie Hexan, Heptan oder generell Petrolether und Benzinfraktionen als Dispergiermittel für nichtoxidische Keramikpulver. Um deren Viskosität anzuheben, eignet sich vor allem Polyisobutylen mit Molmassen bis 5 Mio g/Mol und mehr. Darüberhinaus bildet Polyisobutylen bei der Pyrolyse keinen Kohlerückstand, so daß die stöchiometrischen Verhältnisse im nachfolgenden Sinterprozeß nicht nachteilig verändert werden.

Da beim Spritzgießen nach dem erfindungsgemäßen Verfahren ein Plastifizieren entfällt und die Masse bei Raumtemperatur in die Form eingespritzt wird, wird der Metallabrieb erheblich minimiert.

Die Formwand besteht bevorzugt aus einem offenporigen Sintermetall, dessen Oberflächenrauhigkeit durch Flamm- oder Plasmaspritzen mit sehr feinteiligem Metallpulver, Metalloxidpulver wie $Cr_2O_3$ oder Keramikpulver wie Bornitrid auf 0,5 bis 2 µm erniedrigt wird. Neben einer geringen Oberflächenrauhigkeit wird damit eine gute Entformbarkeit, speziell im Fall von Bornitrid, erzielt. Um einen guten Wärmeübergang zu ermöglichen, wird die Sintermetallschicht möglichst dünn, ca. 1 - 10 mm, gehalten. Daran schließt kompaktes Formmaterial an, das zur Ableitung der Dämpfe mit Bohrungen versehen ist, die zur Sintermetallschicht führen. Der Wasserdampf oder die organischen Dämpfe werden zentral aus der nach außen gasdichten Form in eine Kondensationsvorrichtung abgeführt. Zur schnellen Zuführung der für das Verdampfen des Lösungsmittels benötigten Wärmemenge pro Spritzzyklus ist die Form beispielsweise durch Heizstäbe elektrisch heizbar.

Das erfindungsgemäße Verfahren ermöglicht die Herstellung von stabilen Suspensionen nichtagglomerierter keramischer Pulver. Indem die Verdampfung des Lösungsmittels unter einem Gegendruck erfolgt, der dessen Dampfdruck weit überwiegt, können sich in der Form weder Poren noch Risse ausbilden. Die Wandtemperatur der Form beträgt im allgemeinen 150 bis 450 °C, vorzugsweise 200 bis 400 °C.

Aufgrund des niedrigen Restgehalts organischer Materie, der auf 0,2 Gew.% limitiert sein sollte, erübrigt sich das zeitaufwendige Pyrolysieren. Werden Formtemperaturen oberhalb 300 °C angewandt, so zersetzen sich bereits die Polymeren, und der Restgehalt an organischem Material sinkt weit unter 0,1 %.


## Ansprüche

1. Verfahren zur Herstellung keramischer Formteile, bei dem ein keramisches Pulver mit einem Formadditiv gemischt, die Mischung in eine Form, die die endgültige Gestalt und Abmessungen des Formteils festlegt, eingespritzt, das Formadditiv entfernt und die Formmasse gesintert wird, dadurch gekennzeichnet, daß als Formadditiv eine Lösung eines hochmolekularen Polymeren in einem Lösungsmittel verwendet wird, wobei etwa 50 - 80 Vol-% des desagglomerierten keramischen Pulvers mit etwa 50 - 20 Vol-% der Lösung vermischt werden und die Mischung bei einer Tempertur unterhalb der Siedetemperatur des Lösungsmittels und einem Druck zwischen 100 und 1500 bar in eine poröse, gasdurchlässige Form, die eine Temperatur oberhalb der Siedetemperatur des Lösungsmittels aufweist, eingespritzt wird, und daß der Einspritzdruck solange aufrecht erhalten wird, bis kein Gas mehr aus der Formmasse bzw. der Form entweicht.

2. Verfahren nach Anspruch 1, dadurch gekennzeichnet, daß als Polymere hochmolekulare wasserlösliche Polymere und als Lösungsmittel Wasser eingesetzt werden.

3. Verfahren nach Anspruch 1, dadurch gekennzeichnet, daß als Polymere hochmolekulare wasserlösliche Polymere mit einem ionogenen Anteil unterhalb von 5 Mol-% und als Lösungsmittel Alkohole eingesetzt werden.

4. Verfahren nach Anspruch 1, dadurch gekennzeichnet, daß als Polymeres hochmolekulares Polyisobutylen und als Lösungsmittel aliphatische Kohlenwasserstoffe eingesetzt werden.

5. Verfahren nach einem oder mehreren der Ansprüche 1 bis 4, dadurch gekennzeichnet, daß die Mischung in die auf eine Temperatur von etwa 150 bis 450 °C erwärmte Form eingespritzt wird.

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 88111754.3 |
| X | GB - A - 2 045 739 (ASAHI GLASS COMPANY LTD.)<br>* Gesamt *<br>-- | 1-5 | C 04 B 33/13<br>C 04 B 35/00<br>B 28 B 1/24 |
| X | DE - B - 1 093 280 (BERU-WERK ALBERT RUPRECHT)<br>* Gesamt *<br>-- | 1,5 | B 28 B 1/26<br>B 22 F 3/22 |
| Y | DE - A - 1 771 643 (PORZELLAN-C.M.HUTSCHENREUTHER ARZBERG)<br>* Ansprüche 1-3,6,7 *<br>-- | 1,5 | |
| X | EP - A1 - 0 216 436 (STUDIE CENTRUM VOOR KERNENERGIE)<br>* Gesamt *<br>-- | 1 | |
| D,A | EP - A1 - 0 125 912 (NGK INSULA-TORS, LTD.)<br>* Gesamt *<br>---- | 1 | RECHERCHIERTE SACHGEBIETE (Int. Cl.4)<br><br>C 04 B<br>B 28 B<br>B 22 F |

Der vorliegende Recherchenbericht wurde für alle Patentansprüche erstellt.

| Recherchenort | Abschlußdatum der Recherche | Prüfer |
|---|---|---|
| WIEN | 27-10-1988 | BECK |